# EUROPEAN PATENT SPECIFICATION

(11) **EP 0 448 381 B1**
(45) Date of publication and mention of the grant of the patent: **11.06.1997**
(21) Application number: 91302440.2
(22) Date of filing: 20.03.1991
(51) Int. Cl.: H01B 7/34, C08K 3/22, H01B 3/44, C08L 23/08

(54) **A halogen-free thermoplastic composition for a cable jacket**
Halogen-freie Kunststoffmischung für einen Kabelmantel
Composition thermoplastique non halogénée pour la gaine d'un cable

(30) Priority: 22.03.1990 US 497380
(43) Date of publication of application: 25.09.1991
(73) Proprietor: AT&T Corp., New York, NY 10013-2412 (US); SCAPA GROUP PLC, Blackburn Lancashire BB2 2SZ (GB)
(72) Inventor: Khorramian, Behrooz, New York, New York 1024 (US); Taylor, John Anthony, Poynton, Cheshire SK12 1DL (GB); Richardson, Peter James, Woodford,Cheshire SK7 1PJ (GB)
(74) Representative: Johnston, Kenneth Graham

(56) References cited:
- EP-A- 0 082 407
- EP-A- 0 332 773
- PATENT ABSTRACTS OF JAPAN vol. 7, no. 66 (C-157)18 March 1983 & JP-A-58 001 741 ( FURUKAWA DENKI ) 7 January 1983
- WORLD PATENTS INDEX LATEST Derwent Publications Ltd., London, GB; AN 87053859 & JP-A-62 010 151 (NIPPON PETROCHEM) 19 January 1987

## Description

### Technical Field

This invention relates to a cable having a jacket comprising a fire-resistant, halogen-free, flexible, thermoplastic polymer composition and meeting tests to qualify it as a cable which may be used in demanding applications and to qualify it for other uses such as, for example, tiles and profiles.

### Background of the Invention

Cable is widely used as a transmission medium in the communications industry. Typically, a communications cable includes a core comprising a transmission medium and a sheath system. The sheath system generally includes a plastic jacket. A commonly used plastic material for the jacket in outside plant cable is polyethylene. Although polyethylene has been found to be satisfactory for outside plant cable, there are other applications in which the demands on the cable are such that polyethylene without any additives is not suitable.

Some of the total demands which now may be put on cables include suitable tensile strength and elongation, mechanical ruggedness, tear strength. fluid resistance and flame retardance. Materials for use in communications cables, particularly those for building applications, must be such that the resulting cable passes an industry standard flame test. In addition, the cable should pass physical and mechanical standard tests set forth by Underwriters Laboratories (UL) as well as transmission requirements set forth by manufacturers such as AT&T. Customer requirements may incorporate these standards.

In one application, that is, one for use aboard ships, the requirements are particularly stringent. During tests of several materials for these applications, it was found that it was not unusual that one commercially available material may meet some of the requirements but not others. On the other hand, another commercially available material may meet requirements not met by the one material but fail tests which were passed by the other material. For example, one commercially available material has an elongation of 240%, a tensile strength of 8 MPa and has passed a cold bend or impact test at -15 C whereas the U.S. Navy requires that the maximum elongation be 180%, that the tensile strength should not be less than 9 mPa and that the cable pass a cold test at -28°C. This same material possesses a limiting oxygen index (LOI) of 38-40% and a tear strength of at least 60 Newtons/cm. Another commercially available material has acceptable elongation and tensile strength but has an LOI of 34 to 35% and a tear strength of only 50 Newtons/cm.

The prior art has addressed the problem of cable materials that contribute to flame spread and smoke evolution through the use of halogenated materials such as polyvinyl chloride (PVC) and fluoropolymers. For example, these together with layers of other materials, have been used to control char development, jacket integrity and air permeability to minimize restrictions on choices of materials for insulation within the core in a plenum cable.

Although PVC is very attractive in terms of cost, when it is compared with other polymers, namely, fluorinated polymers, it has relatively high dielectric properties which make it unsuitable for high frequency applications. In addition, some PVC materials exhibit a relatively high degree of corrosivity and smoke generation in fire situations although others which contain high levels of fillers are acceptable for plenum use because they have acceptable levels of flame spread and smoke generation. Nevertheless, there is a desire to use materials other than PVC because of its corrosivity caused by gases generated upon exposure of that material to fire.

The problem of acceptable cable materials design is complicated somewhat by a trend to the extension of the use of optical fiber transmission media. Light transmitting optical fibers are mechanically fragile, exhibiting low strain fracture under tensile loading and degraded light transmission when bent with a relatively low radius of curvature. The degradation in transmission which results from bending is known as microbending loss.

The use of fluoropolymers, with or without underlying protective layers, for an optical fiber building cable jacket requires special consideration of material properties such as crystallinity, and coupling between the jacket and an optical fiber core which can have detrimental effects on the optical fibers. If the jacket is coupled to the optical fiber core, the shrinkage of fluoropolymer plastic material, which is semi-crystalline, following extrusion puts the optical fiber in compression and results in microbending losses in the fiber. Further, thermal expansion coefficients of fluoropolymers relative to glass are large, thereby compromising the stability of optical performance over varying thermal operation conditions. Also, the use of some fluoropolymers requires special care for processing and adds to cost of the cables.

Although cables which include halogen-containing materials have passed test requirements of Underwriters Laboratories, Inc., there has been a desire to overcome some problems which still exist with respect to the use of some fluoropolymer and PVC materials. Both these materials may exhibit undesired levels of corrosion. If a fluoropolymer is used, hydrogen fluoride forms under the influence of heat, causing corrosion. For a PVC, hydrogen chloride is formed. Further, some PVC materials exhibit an undesired level of smoke generation.

If some halogenated materials have undesirable characteristics and industry demands certain characteristics that halogenated materials are lacking, it is logical to inquire as to why non-halogenated materials have not been more widely used for cable materials. Generally, the prior art has treated non-halogenated materials as unacceptable because it has been thought that they are not as flame retardant or that they are too inflexible if they are adequately flame retardant.

Non-halogenated materials have been used in countries outside the United States particularly in the less stringent categories for building cable. One example of a non-halogenated material that has been offered is a polyphenylene oxide plastic material. Ongoing efforts have been in motion in the United States to provide non-halogenated materials, particularly those suited for jacketing, which have a broad range of acceptable properties, as well as a reasonable price, and yet ones which pass industry standards. Such a cable should be one which appeals to a broad spectrum of customers.

One recently proposed cable jacketing composition was disclosed by Messrs. S. Artingstall, A. J. Pyle and Dr. J. A. Taylor in a paper entitled "Recent Advances in Thermoplastic, Zero Halogen, Low Smoke, Fire Retardant Cable Compound Technology". That paper appeared in the Proceedings of the 1987 International Wire and Cable Symposium.

Candidate cable jacketing materials not only should exhibit suitably low flame spread producing characteristics provided by currently used cables which include halogenated materials but also should meet a broad range of desired properties such as low smoke generation, acceptable levels of corrosivity and toxicity and be reasonable in cost. Also, the sought-after cable must have acceptable mechanical properties, suitable electrical properties, especially when immersed in water and a number of other specified fluids, suitable abrasion resistance and suitable processability. The challenge is to provide such a cable which meets the standards in the United States for a broad spectrum of uses. Furthermore, inasmuch as it may be used in applications in which PVC-jacketed cable is now used, the sought-after cable jacket should be characterized by mechanical and electrical properties at least equivalent to those of PVC.

Because of a desire to use plastic materials other than those containing halogens, combustible crosslinked polyethylene mixed with inorganic additives which provide fire-resistance has been used. However, the manufacturing costs for such a composition are relatively high in comparison with PVC, for example, inasmuch as adequate mechanical strength could only be achieved by crosslinking. Further, polyethylene is only receptive to fillers in a known degree. An excessively high filler content causes the composition to become relatively stiff, to have inadequate mechanical cohesion and to be difficult to process. The composition disclosed in German Offenlegungsschrift 25 54 802, includes 179-277% by weight filler but does not have to satisfy high requirements of mechanical strength and would not be suitable, for example, for some cable sheathing applications.

Several techniques have been disclosed to overcome the difficulties of such poor mechanical properties. Fillers may be treated with an unsaturated carboxylic acid before incorporation into the mixture, as described in DE-AS 2262-126 but this produces a relatively rigid material unsuitable for the cable insulation and sheathing.

U. S. patent 3,832,326 describes a flame retardant composition based on a crosslinkable polymeric component containing at least 66% by weight of an ethylene vinyl acetate (EVA) copolymer, a vinyl alkoxy silane, and 80 to 400% by weight of the polymeric component of the mixture of hydrated aluminum oxide containing chemically bound water. The preferred maximum vinyl acetate content is indicated to be 40% by weight. A more preferred maximum is 28% by weight because above this level the tensile and ultimate elongation are believed to suffer. The composition also generally includes a crosslinking agent because it is in the crosslinked form that the product is most preferably used. This is typical of mixtures which includes a high proportion of mineral fillers to achieve adequate flame resistance for halogen-free materials, the mixtures in the thermoplastic state presenting too low a tensile strength thus necessitating the expensive crosslinking process. The foregoing composition still may not offer adequate strength values, and in addition, problems may arise in processing highly filled mixtures at acceptable manufacturing speeds.

In the prior art, there also is provided a flame resistant polymer composition comprising (a) a thermoplastic, halogen free polymer mixture itself comprising (i) a total of a least 15% by weight of an elastomer component which is at least one ethylene copolymer or terpolymer containing a minimum of 38% of comonomers, and (ii) 40 to 85% by weight of a plastomer component containing a minimum of 70% of units derived from ethylene. The composition also includes (b) a mineral filler comprising 180 to 320% of the weight of the polymer mixture and containing at least one metal hydroxide. At least one of the polymer components (i) or (ii) contains bonded therewith 0.5 to 14% by weight of free carboxylic acid groups based on the weight of components (i) or (ii). The important feature of these compositions is that the filler is bound to the polymer phase by the use of carboxylic acid groups. This results in enhanced physical properties but at the expense of increased rigidity, which, although acceptable in some installations, is not entirely satisfactory for shipboard cable applications.

What is sought after and what seemingly is not available is a cable having a jacket including a polymer composition having a relatively high mineral filler content, with a view to achieving suitably high flame resistance and suitable mechanical strength, including suitable thermal compressive strength, as required for cable sheathing, for example. The sought-after polymer composition should be easily workable and should not drip in the event of fire so as to maintain acceptable mechanical consistency for a given emergency duration.

What is needed is a jacketing system for a cable which minimizes the opportunity for the beginning of a fire along the cable, and should such a flame be initiated, one which minimizes the propagation of the flame and smoke. What is needed is a jacket material which meets the requirements of UL and other pertinent tests for a variety of applications. The sought-after after jacket material desirably is one which is non-halogenated, which in cable constructions satisfies the UL and other accepted industry requirements and one which has a reasonable cost and excellent transmission characteristics.

Patent Abstracts of Japan, vol 7 No. 66 (C-157) 18th March 1983 and JP-A-58 001 741 discloses a flame retardant resin composition suitable for use as a covering material for electric cables. The composition discloses ethylene vinyl acetate (EVA) copolymers having a vinyl acetate content of 40 weight percent or more.

EP-A-0 332 773 also discloses a flame retardant resin including EVA and aluminium hydroxide or magnesium hydroxide filler, said resin comprising the preamble of claim 1.
World Patent Index Latest, Derwent Publications Ltd. London, GB; AN 87053859 and JP-A-62 010 151 disclose the manufacture of flat products of EVA such as cable tapes or sheet material.

According to the present invention there is provided a thermoplastic composition as defined in claim 1, or a cable comprising an outer jacket formed from the composition of claim 1 as defined in claims 5 and 6.

By careful selection of plastomer/elastomer ratios and their molecular weights, a composition with suitable physical properties without the need for polymer/filler bonding resulting from carboxylic acid groups is provided.

Additional fillers may be included in the composition of the plastic jacket to the extent of between 0 and 50 parts by weight of the polymer mixture. In order to facilitate the extrusion of the plastic material comprising the jacket. the composition also desirably includes about 2 to 8 parts by weight of the polymer mixture of processing aids, stabilizers and pigments, for example.

### Brief Description of the Drawing

FIG. 1 is a perspective view of a cable which includes the jacketing material of this invention; and
FIG. 2 is an end sectional view of the cable of FIG. 1.

### Detailed Description

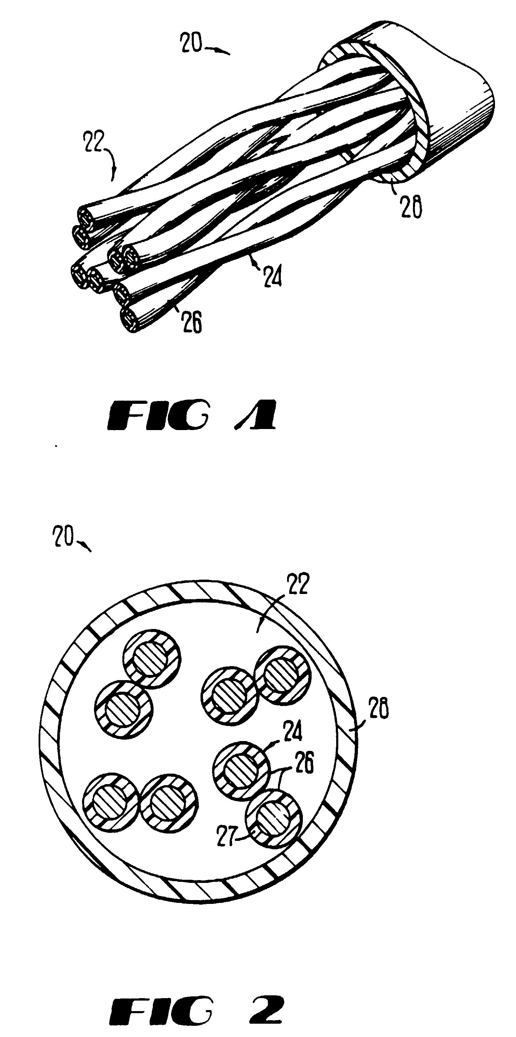

Referring now to FIGS. 1 and 2, there is shown a communication cable which is designated generally by the numeral 20. The cable 20 includes a core 22 which includes a plurality of twisted pairs 24-24 of conductors 26-26. Each conductor of each pair includes a metallic conductor which is enclosed in an insulation material 27 such as a filled polyolefin, for example. The conductor pairs are enclosed in an outer jacket 28.

Although FIGS. 1 and 2 depict a metallic conductor cable, it should be understood that the cable also may be an optical fiber cable. In that instance, the cable includes a core comprising at least one optical fiber enclosed in a sheath system. The sheath system for such a cable may include an outer jacket which is made of a plastic material and strength members embedded in the jacket.

The jacket 28 comprises a plastic material comprised of a mixture of polymers, in combination with 150-250% by weight of the polymer mixture of metal hydroxide fillers. The polymer mixture is comprised of 20-50% by weight of an elastomer constituent and 50-80% by weight of a plastomer constituent. By elastomer in this description is meant an ethylene copolymer or terpolymer which includes at least 38% comonomers. By plastomer is meant an ethylene copolymer or terpolymer which includes a maximum of 30% comonomers. Additional fillers are included in the composition to the extent of about 0 to 50 parts by weight of the polymer mixture. In order to facilitate the extrusion of the plastic material comprising the jacket, the composition also includes about 2 to 8 parts by weight of the polymer mixture of processing aids, stabilizers and pigments, for example.

Preferably the comonomer portion of the elastomer component is a vinyl acetate. This vinyl acetate is economical and produces a composition which can be processed particularly well. Preferably also the elastomer component amounts to 20-35% of the weight of the polymer mixture such that amounts of elastomer in the weight range stated hereinabove produce a relatively high strength composition which can be extruded without plasticiser.

The plastomer constituent of the composition increases the mechanical strength because of the high proportion of ethylene comononer. The comonomer portion of the plastomer is preferably a vinyl acetate. Also, preferably, the plastomer is ethylene vinyl acetate (EVA), or more preferably, ethylene ethyl acrylate (EEA) or ethylene butyl acrylate (EBA) or a mixture thereof, and comprises at least 65 to 80% by weight of the polymer mixture and has a melt flow index in the range of about 0.10-20 grams/10 min.

The plastomer and elastomer polymer constituents of the composition of this invention may be varied in the ranges stated herebefore. By variation of the proportion of these constituents in the context of the ranges mentioned in this invention, certain properties can be improved as a priority without substantial detriment to other properties.

In the preferred embodiment, the metal hydrate is a metal hydroxide. The high degree of filling with metal hydroxide is facilitated by the addition of the elastomer component. Surprisingly high strength factors are achieved without crosslinking and despite an extremely high degree of filling with metal hydroxide.

For purposes of this composition, calcium materials may be used as additional fillers, Naturally, additional fillers such as, for example, kaolin. metal carbonates such as chalk and magnesium carbonate, also can be added to the mixtures according to the invention.

Also, it is advantageous to add substances such as metal carbonates and, in particular, magnesium carbonate which give off inert gases in the event of fire. As mentioned earlier herein, the addition of kaolin also is permissible. Further, in order to facilitate processing of the composition, a silicone elastomer may be added into the composition. Also other additives such as additional polymers, stabilizers and auxiliary processing constituents can be added.

In the composition of the cable jacket of this invention, aluminum hydroxide with a specific surface of the particles of more than 3 m² /gram is used as the hydroxide filler. Particularly advantageous results for the oxygen index and strength occurred with specific surfaces of more than 10 m² /gram. Acceptable results also were obtained when using magnesium hydroxide with a particle size predominantly < 44 µm.

As a minimum, the mineral fillers should contain 70% metal hydroxides. Where superior dielectric properties are required, it is preferred to use metal hydroxides which are low in electrolyte. The remaining constituents may comprise metal oxides e.g. magnesium oxide, which permit a higher LOI by synergy with aluminum hydroxide.

The polymer composition of the jacketing material of this invention having a relatively high mineral filler content presents properties which were not previously thought to be possible even with crosslinking. The composition of the jacket 28 exhibits exceptional flame resistance, which is considerably better than that of PVC and a substantially lower smoke generation in case of fire. Also, the jacket does not produce corrosive gases in the event of fire, and has a moderate LOI value, generally 38-40. The jacket composition does not drip in the event of fire, even without crosslinking and has suitable mechanical strength (> 8N /mm²), is pliable and has suitable thermal compressive strength. Further. the composition provides cable sheathing which guarantees durability for a relatively long time in the event of fire. As a consequence of this invention and by appropriate formulation, it is now possible. for instance, to provide a composition which satisfies the requirements of the U.S. Navy for shipboard wiring cable. Cables manufactured using the material described in this invention have remained operative for longer than 20 minutes at 850 ° C. For cables of this invention, in the event of a fire, an ash structure remains which protects the material underneath the ash, resulting in the electrical insulation being maintained for extended periods.

The thermoplastic polymer compositions according to the invention can be produced economically because of the high proportion of economic fillers and the elimination of the need to crosslink the material. In addition to the properties outlined above, the filling with metal hydroxides, particularly those of aluminum and magnesium, provides extraordinarily good fire resistance.

Because crosslinking is not necessary, the product is relatively odorless and cable manufacture is facilitated by the elimination of a long heating cycle which can result in deformation or melting of the core insulation. In the event of even greater strength or fluid resistance being required, the material may be crosslinked by the use of peroxide or high energy irradiation.

Advantageously, the strength characteristics of the jacket material of the cable of this invention are as good if not better than those of prior art materials in which carboxylic acid groups were bonded in to one of the polymers. As pointed out hereinbefore, carboxylic acid groups increase the cost of the material and increase the ridigity thereof. Comparable strength properties of the jacket composition of this invention are achieved without the use of carboxylic acid bonding to the filler or a crosslinking of any kind and by using a defined range of the weight percent of each of the polymers of the mixture as well as the characterization of the plastomer constituent with a melt flow index.

One of the requirements which is met by cables of this invention is one relating to shipboard cable and being established by the U. S. Navy. The specification which is designated MIL-C-0085045 relates to tear strength and requires that the minimum jacket tear strength shall be 60 Newtons per centimeter (N/cm) of jacket thickness. Tear strength also may be measured by FED-STD-228 method 3111. In accordance with these tests, the composition of this invention should have a tear strength of 48.5 N/cm. Under test, the tear strength of a jacket comprising the inventive composition was on the average 67 and 108 N/cm using two different test methods specified in MIL-C-0085045.

Tensile strength of the composition in accordance with test method FED-STD-228 methods 3021 and 3031 is required to be not less than 900 N/cm² (1300 psi) and the tensile elongation not greater than 180%. The composition of the jacket of this invention was found to be capable of having a minimum tensile strength of 1500 psi (9 MPa) and a maximum tensile elongation of 160%.

The jacket of the cable of this invention also meets the material requirements of U.S. Navy specification MIL-C-0085045 for shipboard cable which require that there should not be more that 2% by weight of cable , acid gases generated from the burning and that the halogen content should not be more than about 2% by weight. The material of this invention did not show any detectable acid gases and the halogen content was less than 0.01% by weight.

The toxicity requirement of U. S. Navy specifications per Naval Engineering Standard 713 is 5.0. For the material of this invention, this value is measured to be 3.0. Using the University of Pittsburgh toxicity protocol which uses LC 50, for material of this invention, LC 50 is 56 gms. The LC 50 of this invention indicates that this material has an acceptable toxicity value.

Also, the jacket material exhibited a mean smoke index of 4.10 and an oxygen index at 23°C of 38% and at 306°C of 21%. The jacket also meets U.S. Navy requirements for fungus resistance and fluid resistivity using fluids specified by MIC-C-0085045.

It should be apparent that the use of compositions according to the invention is not restricted to electrical cables. but can be used wherever economical. fire-resistant materials. which are mechanically strong without crosslinking, are required. Processing to form elongated, flat products such as sheets, tapes, foils and sectional members may be accomplished with the compositions of this invention. One such example of a flat product is one for use as a floor covering, e. g. a tile. Example 1 is provided for comparative purposes.

### Example 1

In one example, a jacketing composition included 50 parts by weight of an elastomer constituent and 50 parts by weight of a plastomer constituent and 200 parts by weight of an aluminum hydroxide. The composition also included 20 parts by weight of calcium carbonate and 2.5 parts by weight of processing aids and pigments. For this composition. the tensile strength was measured to be 8.9 MPa and the elongation, 215%.

### Example 2

A jacketing composition of a cable of this invention was prepared to include 30 parts by weight of an elastomer, 70 parts by weight of a plastomer, 200 parts by weight of aluminum hydroxide, 20 parts by weight of calcium carbonate and 2.5 parts by weight of processing aids and pigments. For this example composition. the tensile strength was measured to be 11.5 MPa and the elongation, 160%.

## Claims

1. A halogen-free thermoplastic composition of matter which is suitable for use as a cable jacketing material, said composition comprising a polymer mixture in combination with about 150-250% by weight of the polymer mixture of metal hydroxide filler, and about 2-8% by weight of the polymer mixture of a suitable additive system, said polymer mixture comprising an elastomer constituent and a plastomer constituent - neither of which includes carboxylic acid groups that are bonded to said filler, the plastomer constituent being an ethylene vinyl acetate copolymer with a maximum 30% by weight of unsaturated ester monomers and having a melt flow index in the range of 0.10-20 grams/10 min, said elastomer constituent being a polyethylene vinyl acetate copolymer with at lead 38% by weight of unsaturated ester comonomers
CHARACTERIZED BY
said polymer mixture being comprised of about 20-35% by weight of the elastomer constituent and about 65-80% by weight of the plastomer constituent.

2. The composition of claim 1 wherein said composition also includes as much as about 50% by weight of the polymer mixture of additional fillers.

3. The composition of claim 1 wherein said metal hydroxide filler comprises aluminum hydroxide.

4. The composition of claim 1 wherein said metal hydroxide filler comprises magnesium hydroxide.

5. A cable which includes a core comprising at least one transmission medium, and a sheath system which includes an outer jacket, said outer jacket being formed from the composition of claim 1.

6. A flat product which is formed from the composition of claim 1.

## Patentansprüche

1. Halogenfreie, thermoplastische Materialzusammensetzung, die sich zur Verwendung als Kabelmantelmaterial eignet und aus einem Polymergemisch zusammen mit etwa 150-250 Gew.-%, bezogen auf das Polymergemisch, an Metallhydroxidfüllstoff und etwa 2-8 Gew.-%, bezogen auf das Polymergemisch, an einem geeigneten Zusatzstoffsystem besteht, wobei das Polymergemisch einen elastomeren Bestandteil und einen plastomeren Bestandteil umfaßt, von denen keiner an den Füllstoff gebundene Carbonsäuregruppen enthält, der plastomere Bestandteil ein Ethylen/Vinylacetat-Copolymerisat mit höchstens 30 Gew.-% an ungesättigten Estermonomeren darstellt und einen Schmelzindex im Bereich von 0,10-20 Gramm/10 min aufweist, und es sich bei dem elastomeren Bestandteil um ein Polyethylen/Vinylacetat-Copolymerisat mit mindestens 38 Gew.-% an ungesättigten Estercomonomeren handelt, dadurch gekennzeichnet, daß das Polymergemisch zu etwa 20-35 Gew.-% aus dem elastomeren Bestandteil und zu etwa 65-80 Gew.-% aus dem plastomeren Bestandteil besteht.

2. Zusammensetzung nach Anspruch 1, wobei die Zusammensetzung noch bis zu etwa 50 Gew.-%, bezogen auf das Polymergemisch, an zusätzlichen Füllstoffen enthält.

3. Zusammensetzung nach Anspruch 1, wobei der Metallhydroxidfüllstoff Aluminiumhydroxid beinhaltet.

4. Zusammensetzung nach Anspruch 1, wobei der Metallhydroxidfüllstoff Magnesiumhydroxid beinhaltet.

5. Kabel mit einer mindestens ein Übertragungsmedium beinhaltenden Ader und einem Hüllensystem mit einem aus der Zusammensetzung nach Anspruch 1 geformten Außenmantel.

6. Aus der Zusammensetzung nach Anspruch 1 geformtes Flächengebilde.

## Revendications

1. Composition de matière thermoplastique non halogénée qui convient pour être utilisée comme matériau de gainage de câbles, ladite composition comprenant un mélange de polymères en combinaison avec environ 150-250%, en poids du mélange de polymères, de charge d'hydroxyde métallique, et environ 2-8% en poids du mélange de polymères, d'un système additif convenable, ledit mélange de polymères comprenant un constituant élastomère et un constituant plastomère - dont ni l'un ni l'autre ne contient de groupes acides carboxyliques qui sont liés à ladite charge, le constituant plastomère étant un copolymère éthylène/acétate de vinyle comportant au maximum 30% en poids de monomères esters insaturés et ayant un indice de fluidité à chaud dans la gamme de 0,10-20 grammes/10 min, ledit constituant élastomère étant un copolymère polyéthylène/acétate de vinyle comportant au moins 38% en poids de comonomères esters insaturés,
caractérisée en ce que
ledit mélange de polymères se compose d'environ 20-35% en poids du constituant élastomère et d'environ 65-80% en poids du constituant plastomère.

2. Composition selon la revendication 1, dans laquelle ladite composition comprend aussi jusqu'à environ 50% en poids du mélange de polymères, de charges supplémentaires.

3. Composition selon la revendication 1, dans laquelle ladite charge d'hydroxyde métallique comprend de l'hydroxyde d'aluminium.

4. Composition selon la revendication 1, dans laquelle ladite charge d'hydroxyde métallique comprend de l'hydroxyde de magnésium.

5. Câble qui comprend une âme comprenant au moins un milieu de transmission, et un système de gainage qui comprend une enveloppe externe, ladite enveloppe externe étant formée de la composition de la revendication 1.

6. Produit plat formé à partir de la composition de la revendication 1.
